# EUROPEAN PATENT APPLICATION

(11) **EP 4 830 983 A1**
(43) Date of publication of application: **28.10.2026**
(21) Application number: 24908297.5
(22) Date of filing: 17.12.2024
(51) Int. Cl.: B60L 53/60, B60L 53/30, G06Q 50/40

(54) **ELECTRIC VEHICLE CHARGING APPARATUS**

(30) Priority: 18.12.2023 KR 20230184065; 28.10.2024 KR 20240148424
(71) Applicant: LG Innotek Co., Ltd., Seoul 07796 (KR)
(72) Inventor: LEE, Kyu Min, Seoul 07796 (KR); KWON, Gook Min, Seoul 07796 (KR)
(74) Representative: Plasseraud IP
(86) International application number: PCT/KR2024/097044
(87) International publication number: WO 2025/136015

(57) **Abstract**

According to an embodiment, there is provided an electric vehicle charging device comprising: a communication unit that receives sensing data from sensors disposed in a charger power module; a first processing unit that determines whether an abnormality has occurred in the power module using first sensing data, and temporarily suspends operation of the power module upon determining that an abnormality has occurred in the power module; and a second processing unit that determines whether a failure has occurred in the power module using second sensing data, and maintains the power module in a stopped state upon determining that a failure has occurred in the power module.

## Description

### [TECHNICAL FIELD]

The embodiments relate to an electric vehicle charging device.

### [BACKGROUND ART]

Technology for detecting or diagnosing failures in the power module of an electric vehicle charging device is critically important for ensuring the safety and reliability of power conversion equipment. When a power module fails, it can affect the entire electric vehicle charging system and, in severe cases, can damage the battery or the vehicle's electronic devices.

When a failure occurs in a conventional electric vehicle charging device power module, the charging device transmits a fault mode to the charger operating system via communication. Since the charger operating system has difficulty accurately determining the fault status of the power module, it decides the power module's operation based on the fault mode, and in some fault modes, it halts the operation of the charging device power module until a separate external confirmation is made.

However, when the charging device power module is not operating, there is a problem that the power available for operating the charging device becomes insufficient, thereby increasing the charging time for electric vehicle charging customers.

In addition, conventional power modules have multiple fault types, and since the determination of these faults is performed by the charger operating system, there is a problem that accurate determinations are difficult to make.

### [DISCLOSURE OF THE INVENTION]

### [Technical Problem]

A technical problem to be solved by the present invention is to provide an electric vehicle charging device capable of performing self-diagnosis of faults within the power module itself.

Another object is to provide an electric vehicle charging device capable of controlling the operation of the power module based on the results of fault diagnosis.

Another object is to provide an electric vehicle charging device capable of reducing the load on a charger operating system that manages a plurality of charging devices.

Another object is to provide an electric vehicle charging device capable of improving the operational efficiency of the charging device.

### [Technical Solution]

According to an embodiment, there is provided an electric vehicle charging device comprising: a communication unit that receives sensing data from sensors disposed in a charger power module; a first processing unit that determines whether an abnormality has occurred in the power module using first sensing data, and temporarily suspends operation of the power module upon determining that an abnormality has occurred; and a second processing unit that determines whether a failure has occurred in the power module using second sensing data, and maintains the power module in a stopped state upon determining that a failure has occurred.

The sensing data may include temperature data, voltage and current data, vibration and noise data, and insulation resistance data.

The second processing unit may count the number of abnormality occurrences in the power module using the second sensing data collected over a predetermined period of time.

The second processing unit may determine that a failure has occurred in the power module when the number of abnormality occurrences exceeds a preset count.

The second processing unit may release the temporary suspension state of the power module when the number of abnormality occurrences does not exceed the preset count.

The communication unit may transmit a notification message to the charger operating system upon determining that a failure has occurred in the power module.

The second processing unit may determine the type of abnormality in the power module.

The second processing unit may determine that a failure has occurred in the power module when the number of abnormality occurrences for the same abnormality type exceeds the preset count.

The second processing unit may release the temporary suspension state of the power module when the number of abnormality occurrences for the same abnormality type does not exceed the preset count.

### [Advantageous Effects of the Invention]

The electric vehicle charging device according to the embodiment is capable of performing self-diagnosis of faults within the power module itself.

In addition, the operation of the power module can be controlled based on the results of fault diagnosis.

In addition, the load on a charger operating system that manages a plurality of charging devices can be reduced.

In addition, the operational efficiency of the charging device can be improved.

### [Brief Description of the Drawings]

FIG. 1 is a conceptual diagram of an electric vehicle charging device according to an embodiment.
FIG. 2 is a diagram for explaining a power module according to an embodiment.
FIG. 3 is a diagram for explaining the operation of an electric vehicle charging device according to an embodiment.
FIGS. 4 and 5 are operation flowcharts of an electric vehicle charging device according to an embodiment.

### [Best Mode for Carrying Out the Invention]

Hereinafter, preferred embodiments of the present invention will be described in detail with reference to the accompanying drawings.

However, the technical idea of the present invention is not limited to the described embodiments, and may be implemented in various different forms. Within the scope of the technical idea of the present invention, one or more of the constituent elements among the embodiments may be selectively combined and substituted for use.

In addition, terms (including technical and scientific terms) used in the embodiments of the present invention may be interpreted in meanings generally understood by those of ordinary skill in the art to which the present invention belongs, unless explicitly defined and described otherwise. Commonly used terms, such as terms defined in dictionaries, may be interpreted in consideration of the contextual meaning of the related art.

Furthermore, terms used in the embodiments of the present invention are intended to describe the embodiments and are not intended to limit the present invention.

In this specification, the singular form may also include the plural unless specifically stated otherwise in the phrase, and when described as "at least one (or one or more) of A, B, and C," it may include one or more of all possible combinations of A, B, and C.

In addition, in describing the constituent elements of the embodiments of the present invention, terms such as first, second, A, B, (a), and (b) may be used.

These terms are only used to distinguish one component from another, and the nature, order, or sequence of the component is not limited by the term.

When a component is described as being "connected," "coupled," or "linked" to another component, it includes not only the case where the component is directly connected, coupled, or linked to that other component, but also the case where the component is "connected," "coupled," or "linked" by yet another component interposed between the component and the other component.

In addition, when described as being formed or disposed "above (on top of) or below (underneath)" each component, "above (on top of) or below (underneath)" includes not only cases where two components are in direct contact with each other, but also cases where one or more additional components are formed or disposed between the two components. Furthermore, when expressed as "above (on top of) or below (underneath)," it may include not only the upward direction but also the downward direction with respect to one component.

Hereinafter, the embodiments will be described in detail with reference to the accompanying drawings. Regardless of reference numerals, identical or corresponding components are given the same reference numbers, and redundant descriptions thereof will be omitted.

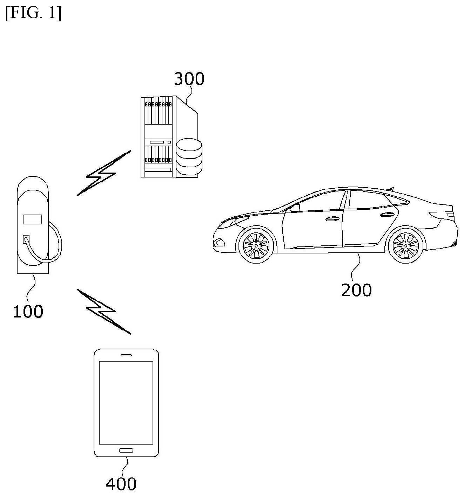

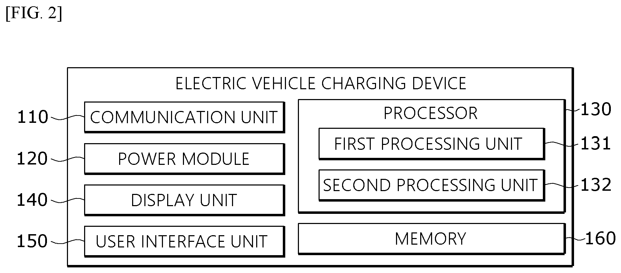

FIG. 1 is a conceptual diagram of an electric vehicle charging device according to an embodiment, and FIG. 2 is a block diagram of the electric vehicle charging device according to an embodiment.

Referring to FIGS. 1 and 2, the electric vehicle charging device (100) according to an embodiment is connected to a power outlet provided in an apartment, house, public place, or public building via a power outlet connection connector (C) formed on the exterior, and supplies the power from the power outlet to the electric vehicle (200) connected via a connector (C) for the electric vehicle (200), thereby enabling the battery to be charged.

The electric vehicle charging device (100) receives a charging control signal from an external charger operating system (300), switches the power connection between the power outlet and the electric vehicle (200) according to the received control signal, and supplies the AC commercial power applied through the power outlet to the electric vehicle (200).

The electric vehicle charging device (100) may include a communication unit (110), a power module (120), a processor (130), a display unit (140), a user interface unit (150), and a memory (160).

In addition, the electric vehicle charging device (100) may be provided with a connector (C) for connection to the electric vehicle (200).

The communication unit (110) may communicate with a user terminal (400) held by the driver of the electric vehicle (200) or with the charger operating system (300) to transmit and receive data.

The power module (120) may supply commercial power from the power outlet to the electric vehicle (200) according to switching by the processor (130).

The power module (120) may be configured to include a rectifier, an AC-DC converter, a DC-DC converter, and the like. It may rectify the commercial power applied from the power outlet through the rectifier and then convert it into DC power for use in the electric vehicle (200) through the AC-DC converter and the DC-DC converter.

When the electric vehicle (200) uses DC power, the power module (120) converts the AC power supplied from the power outlet into DC power for use in the electric vehicle (200) and supplies it. When the electric vehicle (200) uses AC power, the power module (120) can supply it directly to the electric vehicle (200) without any power conversion.

The memory (160) stores programs and various data for controlling the charging device, and can load programs or read and write data upon request from the processor (130).

The processor (130) can perform overall control of the charging device and can be configured to execute programs and instructions stored in the memory (160).

The processor (130) can switch the power connection between the power module (120) and the electric vehicle (200) according to the charging station operating system or operation mode, and control power to be supplied from the power module (120) to the electric vehicle (200) to enable charging.

The processor (130) can control whether to supply power to the electric vehicle (200) through the power module (120). The electric vehicle (200) charging device may additionally include a protection circuit that cuts off the connection between the power module (120) and the electric vehicle (200) in the event of overcurrent, overvoltage, or overcharging.

The processor (130) can calculate the amount of charging power supplied from the power module (120) to the electric vehicle (200). For example, the processor (130) can calculate the amount of power by multiplying the current supplied to the electric vehicle (200) by the charging voltage.

Upon completion of charging, the processor (130) can transmit the calculated charging power amount to the user terminal via the communication unit (110), enabling the user to verify the charging power amount relative to the charged fee paid.

The processor (130) may include a first processing unit (131) and a second processing unit (132).

The display unit (140) is composed of LEDs, LCDs, etc., and may be provided on the front of the electric vehicle charging device (100), and can display information on the operating status of the electric vehicle charging device (100). The display unit (140) may also be configured as a touch screen capable of detecting input, and can receive user requests directed to the charging device.

The user interface unit (150) may be configured as a hard-type interface provided at a predetermined location outside the charging device, or as a soft-type touch interface on the display unit (140), in order to receive various requests related to the operation of the charging device.

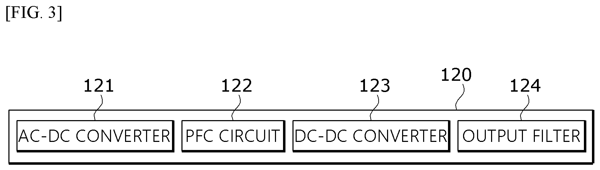

FIG. 3 is a diagram for explaining the power module according to an embodiment.

The power module (120) is a core component that performs power conversion to efficiently charge electric vehicle batteries. The electric vehicle charging device requires a complex power conversion process for charging speed, efficiency, and stability. The power module (120) performs the role of converting the input power (AC or DC) into voltage and current suitable for the vehicle's battery.

The power module (120) can perform multiple power conversion stages and may include an AC-DC converter (121), a PFC circuit (122), a DC-DC converter (123), and an output filter (124).

The AC-DC converter (121) serves as a rectifier and performs the operation of converting the AC power input to the charging device (100) into DC power. The AC-DC converter (121) can convert AC voltage to DC voltage using a diode bridge or active rectification circuit. Active rectification can generally provide higher efficiency.

The PFC (Power Factor Correction) circuit (122) improves the power factor to increase power efficiency in the power grid and reduce electromagnetic interference (EMI). The PFC circuit (122) matches the waveform of the input current with the voltage waveform of the AC power supply, thereby reducing power loss and minimizing the impact on the power grid.

The DC-DC converter (123) can convert the rectified DC voltage into voltage and current suitable for the electric vehicle's battery. The DC-DC converter (123) can adjust the DC voltage using a CLLC resonant converter, LLC resonant converter, or a simple Buck converter, etc. The CLLC resonant converter can be frequently used in electric vehicle charging devices as it provides particularly high efficiency and low EMI.

The output filter (124) removes ripple voltage from the output of the DC-DC converter (123) and provides stable DC power to improve battery protection and charging efficiency. The output filter (124) uses an LC filter (inductor and capacitor) to reduce voltage ripple and generate pure DC power.

The power module (120) can process power in the following stages.

First, the AC power input to the charging device (100) can be converted into DC power by the AC-DC converter (121). In this process, the PFC circuit (122) can be used to improve the power factor. This optimizes power usage from the power grid and reduces power loss.

The rectified DC voltage can be converted by the DC-DC converter (123) into a voltage suitable for the electric vehicle's battery. At this stage, regulation of voltage and current is critically important, and the voltage and current can be adjusted in real time by the processor (130) according to the state of charge of the battery.

The converted DC voltage can be stabilized through the output filter (124). The output filter (124) can provide DC power to the battery by removing voltage ripple and noise.

The processor (130) manages the entire charging process and can adjust the charging voltage and current according to the battery state, thereby preventing battery overcharging, overheating, or other damage.

Through these processes, the power module (120) can convert AC or DC power into the power required by the electric vehicle battery with minimal loss. In addition, by supplying constant and stable power to the electric vehicle battery, charging efficiency can be improved and battery life extended.

In addition, by effectively dissipating heat generated during the charging process, the performance and stability of the module can be maintained. Furthermore, by detecting overvoltage, overcurrent, and overheating, the charging system is protected and safe charging is ensured.

The electric vehicle charging device according to the embodiment collects information through sensors mounted on the power module (120), analyzes the collected information to determine the abnormal or faulty state of the power module (120), and controls the operation of the power module (120) or transmits the analyzed results to the charger operating system (300).

The communication unit (110) can receive sensing data from sensors disposed in the charger power module (120).

In an embodiment, a sensor refers to a device mounted at a specific location on the power module (120) to collect various data on the operation of the power module (120) or its surrounding environment. For example, sensors may include temperature sensors, current sensors, vibration sensors, noise sensors, resistance sensors, and the like. Each sensor can be mounted at a different location on the power module (120) to independently generate sensing data.

For example, a sensor may be mounted inside the power module (120) to monitor the temperature of power devices (e.g., IGBTs, MOSFETs) in real time.

For example, voltage and current sensors may be installed at the input and output terminals of the power module (120) to detect the voltage and current entering and leaving the power module (120).

For example, vibration sensors or microphones may be installed inside the power module (120) to detect vibration or noise generated by the power module (120).

For example, a sensor may be installed inside the power module (120) to monitor insulation status and detect insulation resistance.

In an embodiment, sensing data generated through sensors may include temperature data, voltage and current data, vibration and noise data, and insulation resistance data.

In addition, the communication unit (110) can transmit a notification message to the charger operating system (300) upon determining that a failure has occurred in the power module (120). The notification message may include information on the type of failure and the fault status that occurred in the power module (120). The notification message may also include information indicating that replacement or repair of the power module (120) is necessary.

The first processing unit (131) determines whether an abnormality has occurred in the power module (120) using the first sensing data, and upon determining that an abnormality has occurred, can temporarily suspend the operation of the power module (120).

The first sensing data refers to sensing data collected while the power module (120) is in normal operation or in a standby state. The first sensing data may include at least one of temperature data, voltage and current data, vibration and noise data, and insulation resistance data.

For example, the first processing unit (131) can determine whether an abnormality has occurred in the power module (120) using temperature data. The first processing unit (131) can determine that an abnormality has occurred when the temperature in the temperature data exceeds a certain threshold. Through continuous temperature data analysis, the first processing unit (131) can detect abnormal temperature rise patterns and determine abnormality types such as problems with the cooling system or thermal overload of power devices.

For example, the first processing unit (131) can determine whether an abnormality has occurred in the power module (120) using current and voltage data. The first processing unit (131) can monitor power flow in real time using data from voltage and current sensors installed at the input and output terminals of the power module (120). When the voltage or current deviates from the expected range, the first processing unit (131) can detect faults such as overvoltage, undervoltage, overcurrent, or short circuit. The first processing unit (131) can detect abnormal current spikes, voltage drops, or excessive power consumption in the voltage and current data to determine abnormality types such as component damage, circuit short circuits, or poor contact.

Alternatively, the first processing unit (131) can analyze the waveforms of current and voltage in the power module (120) to determine whether an abnormality has occurred. The first processing unit (131) can compare the waveforms of collected current and voltage data with normal-state waveforms to detect abnormal changes. For example, abnormal waveforms can be generated by increased switching noise, asymmetrical waveforms, or increased power ripple. Through waveform analysis, the first processing unit (131) can determine abnormality types such as failures in specific switching devices, problems in resonant circuits, or degraded performance of filter components.

Alternatively, the first processing unit (131) can use vibration and noise data to determine whether an abnormality has occurred. Using vibration and noise data, the first processing unit (131) can analyze mechanical vibrations or noise generated by the power module (120) to detect abnormalities. Abnormal vibration or noise may be generated when an abnormality occurs inside the power module (120). For example, anomalies in the cooling fan or hum generated from the core of a transformer can be signs of such failures. The first processing unit (131) can detect such abnormal signals through vibration sensors or microphones, and determine abnormality types such as motor or fan problems and transformer abnormalities.

Alternatively, the first processing unit (131) can use insulation resistance data to determine whether an abnormality has occurred. The first processing unit (131) can monitor the insulation status inside the power module (120) to check whether the insulation resistance is within an acceptable range. When insulation resistance decreases, leakage current increases and an abnormal state may occur; a decrease in insulation resistance can indicate an electrical insulation problem. The first processing unit (131) can periodically measure insulation resistance to diagnose aging or damage to insulators at an early stage, and determine abnormality types such as leakage current or electrical insulation issues.

Alternatively, the first processing unit (131) can use machine learning and AI algorithms to continuously monitor the status of the power module (120) and predict failures. The first processing unit (131) can determine whether an abnormality has occurred by analyzing operating patterns that differ from normal patterns based on big data. The AI algorithm of the first processing unit (131) can compare learned patterns with real-time data to detect abnormal behavior and infer abnormality types.

When the first processing unit (131) determines that an abnormality has occurred in the power module (120), it can temporarily suspend the operation of the power module (120) and output information indicating that an abnormality has occurred and information on the abnormality type. The output information can be transmitted to the charging station operating system via the communication unit (110).

The second processing unit (132) determines whether a failure has occurred in the power module (120) using the second sensing data, and may include the second processing unit (132) that maintains the stopped state of the power module (120) upon determining that a failure has occurred.

The second sensing data refers to sensing data collected while the power module (120) is temporarily suspended after the first processing unit (131) has determined that an abnormality has occurred. The second sensing data may include at least one of temperature data, voltage and current data, vibration and noise data, and insulation resistance data, the same as the first sensing data.

The second processing unit (132) can determine whether an abnormality has occurred in the power module (120) using the second sensing data, in the same manner as the first processing unit (131). The second processing unit (132) can determine whether a failure has occurred in the power module (120) using the result of the abnormality determination based on the second sensing data.

For example, the second processing unit (132) can count the number of abnormality occurrences in the power module (120) using the second sensing data collected over a predetermined period of time.

The second processing unit (132) can determine that a failure has occurred in the power module (120) when the number of abnormality occurrences exceeds the preset count.

The second processing unit (132) can maintain the stopped state of the power module (120) when a failure has occurred in the power module (120).

The second processing unit (132) can release the temporary suspension state of the power module (120) when the number of abnormality occurrences does not exceed the preset count.

That is, the second processing unit (132) repeatedly determines whether an abnormality has occurred while the operation of the power module (120) is temporarily suspended, and if the repeated determination concludes that an abnormality has occurred, it can ultimately determine that a failure has occurred in the power module (120).

Alternatively, the second processing unit (132) can determine the type of abnormality in the power module (120), and determine that a failure has occurred in the power module (120) when the number of abnormality occurrences for the same abnormality type exceeds the preset count.

The second processing unit (132) can maintain the stopped state of the power module (120) when a failure has occurred in the power module (120).

The second processing unit (132) can release the temporary suspension state of the power module (120) when the number of abnormality occurrences for the same abnormality type does not exceed the preset count.

That is, the second processing unit (132) repeatedly determines whether an abnormality has occurred and the type of abnormality while the operation of the power module (120) is temporarily suspended, and if the repeated determination concludes that the same abnormality type is continuously occurring, it can ultimately determine that a failure has occurred in the power module (120).

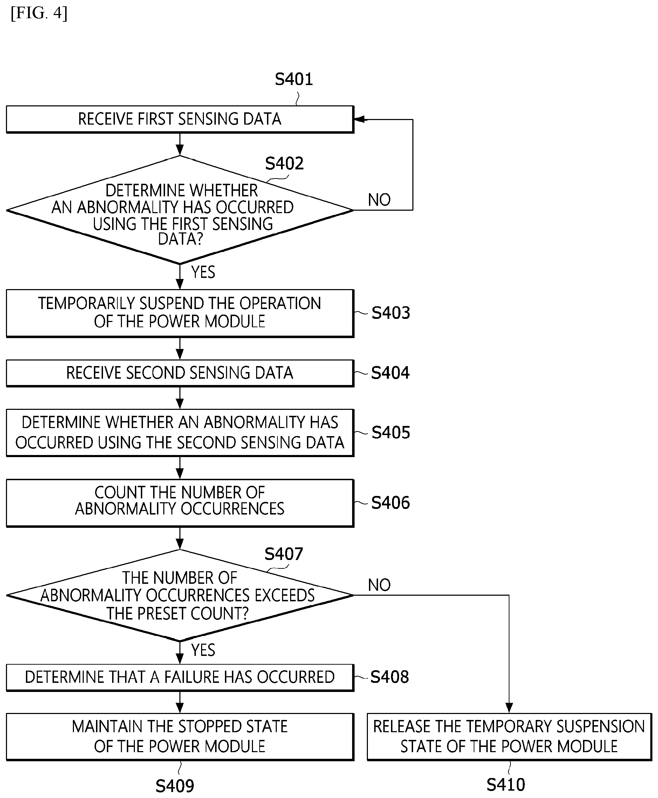

FIG. 4 is an operation flowchart of the electric vehicle charging device according to an embodiment.

Referring to FIG. 4, first, the communication unit can receive first sensing data from sensors disposed in the charger power module (S401).

Next, the first processing unit can determine whether an abnormality has occurred in the power module and the type of abnormality using the first sensing data (S402).

Next, upon determining that an abnormality has occurred in the power module, the first processing unit can temporarily suspend the operation of the power module (S403).

Next, the communication unit can receive second sensing data from sensors disposed in the charger power module (S404).

Next, the second processing unit can determine whether an abnormality has occurred in the power module using the second sensing data (S405).

Next, the second processing unit can count the number of abnormality occurrences in the power module using the second sensing data collected over a predetermined period of time (S406).

Next, when the number of abnormality occurrences exceeds the preset count, the second processing unit can determine that a failure has occurred in the power module (S407-408).

Next, when a failure has occurred in the power module, the second processing unit can maintain the stopped state of the power module (S409).

Alternatively, the second processing unit can release the temporary suspension state of the power module when the number of abnormality occurrences does not exceed the preset count (S410).

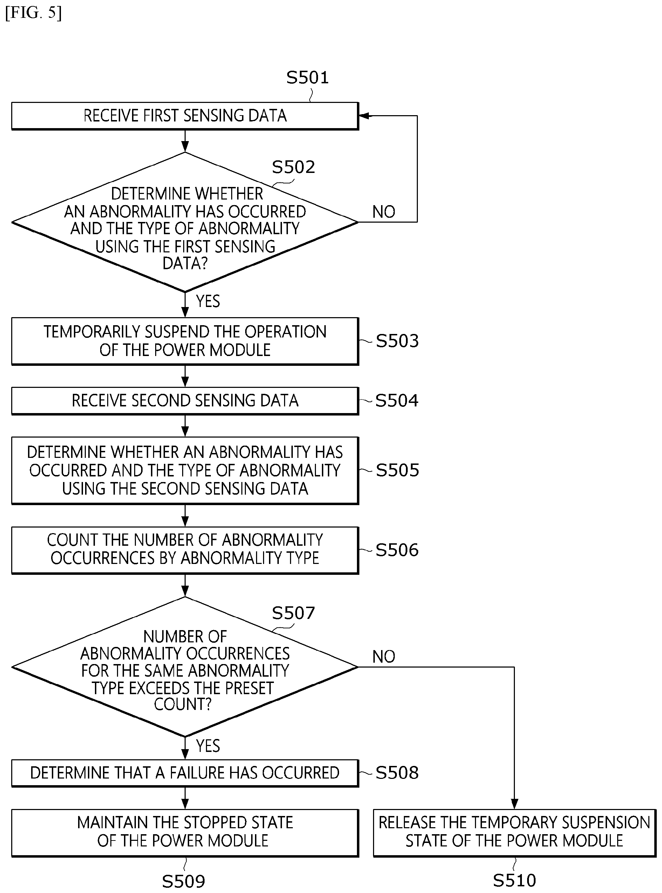

FIG. 5 is an operation flowchart of the electric vehicle charging device according to an embodiment.

Referring to FIG. 5, first, the communication unit can receive first sensing data from sensors disposed in the charger power module (S501).

Next, the first processing unit can determine whether an abnormality has occurred in the power module and the type of abnormality using the first sensing data (S502).

Next, upon determining that an abnormality has occurred in the power module, the first processing unit can temporarily suspend the operation of the power module (S503).

Next, the communication unit can receive second sensing data from sensors disposed in the charger power module (S504).

Next, the second processing unit can determine whether an abnormality has occurred in the power module and the type of abnormality using the second sensing data (S505).

Next, the second processing unit can count the number of abnormality occurrences in the power module by abnormality type, using the second sensing data collected over a predetermined period of time (S506).

Next, when the number of abnormality occurrences for the same abnormality type exceeds the preset count, the second processing unit can determine that a failure has occurred in the power module (S507-508).

Next, when a failure has occurred in the power module, the second processing unit can maintain the stopped state of the power module (S509).

Alternatively, the second processing unit can release the temporary suspension state of the power module when the number of abnormality occurrences for the same abnormality type does not exceed the preset count (S510).

The term "unit" used in the present embodiment refers to a software or hardware component such as an FPGA (field-programmable gate array) or ASIC, and the "unit" performs certain roles. However, "unit" is not meant to be limited to software or hardware. A "unit" may be configured to reside in an addressable storage medium or to execute on one or more processors. Thus, as an example, a "unit" includes components such as software components, object-oriented software components, class components, and task components, as well as processes, functions, attributes, procedures, subroutines, segments of program code, drivers, firmware, microcode, circuits, data, databases, data structures, tables, arrays, and variables. The functionality provided within components and "units" may be combined into a smaller number of components and "units," or further separated into additional components and "units." Furthermore, the components and "units" may be implemented to execute on one or more CPUs within a device or a security multimedia card.

While the foregoing has been described with reference to preferred embodiments of the present invention, those skilled in the art will understand that the present invention can be variously modified and changed without departing from the spirit and scope of the invention as set forth in the following claims.

## Claims

1. An electric vehicle charging device comprising:
a communication unit that receives sensing data from sensors disposed in a charger power module;
a first processing unit that determines whether an abnormality has occurred in the power module using first sensing data, and temporarily suspends operation of the power module upon determining that an abnormality has occurred in the power module; and
a second processing unit that determines whether a failure has occurred in the power module using second sensing data, and maintains the power module in a stopped state upon determining that a failure has occurred in the power module.

2. The electric vehicle charging device of claim 1, wherein the sensing data includes temperature data, voltage and current data, vibration and noise data, and insulation resistance data.

3. The electric vehicle charging device of claim 1, wherein the second processing unit counts the number of abnormality occurrences in the power module using the second sensing data collected over a predetermined period of time.

4. The electric vehicle charging device of claim 3, wherein the second processing unit determines that a failure has occurred in the power module when the number of abnormality occurrences exceeds a preset count.

5. The electric vehicle charging device of claim 3, wherein the second processing unit releases the temporary suspension state of the power module when the number of abnormality occurrences does not exceed the preset count.

6. The electric vehicle charging device of claim 1, wherein the communication unit transmits a notification message to a charger operating system upon determining that a failure has occurred in the power module.

7. The electric vehicle charging device of claim 1, wherein the second processing unit determines the type of abnormality in the power module.

8. The electric vehicle charging device of claim 7, wherein the second processing unit determines that a failure has occurred in the power module when the number of abnormality occurrences for the same abnormality type exceeds the preset count.

9. The electric vehicle charging device of claim 7, wherein the second processing unit releases the temporary suspension state of the power module when the number of abnormality occurrences for the same abnormality type does not exceed the preset count.
